# EUROPÄISCHE PATENTSCHRIFT

(11) **EP 2 910 859 B1**
(45) Veröffentlichungstag und Bekanntmachung des Hinweises auf die Patenterteilung: **28.02.2018**
(21) Anmeldenummer: 15153199.3
(22) Anmeldetag: 20.10.2011
(51) Int. Cl.: F24D 3/12, F24D 19/02, F24H 9/12, F24D 19/00

(54) **Heizkörper**
Heater
Radiateur

(30) Priorität: 23.10.2010 EP 10013911
(43) Veröffentlichungstag der Anmeldung: 26.08.2015
(62) Teilanmeldung aus: 11008424.1
(73) Patentinhaber: Zehnder Group International AG, 5722 Gränichen (CH)
(72) Erfinder: Diethelm, Roland, 8404 Winterthur (CH); Götz, Renato, 5035 Unterentfelden (CH)
(74) Vertreter: Rausch Wanischeck-Bergmann Brinkmann

(56) Entgegenhaltungen:
- WO-A1-98/09127
- WO-A1-2009/116387
- DE-U1-202008 005 825

## Beschreibung

Die Erfindung betrifft einen Heizkörper zur Heizung eines Raums oder Teilen hiervon, mit einem modularen Aufbau, wobei als Modulkomponenten ein flächenhaft ausgebildetes Heizelement, eine frontseitig am Heizelement angeordnete Abdeckung, eine Anschlusseinheit zur Versorgung des Heizelements mit einem Heizmedium sowie eine das Heizelement, die Abdeckung und die Anschlusseinheit aufnehmende Rahmenkonstruktion vorgesehen sind.

Heizkörper als solche sind in vielfältigen Ausgestaltungsformen aus dem Stand der Technik bekannt, weshalb es eines gesonderten druckschriftlichen Nachweises an dieser Stelle nicht bedarf.

Aus der DE 20 2008 005 825 U1 ist beispielsweise ein Heizkörper in der Ausgestaltungsform eines Gebläsekonvektorsystems bekannt. Das System umfasst baugleiche, miteinander koppelbare Gebläsekonvektor-Module und Abdeckungen, die der Verkleidung von einem oder mehreren gekoppelten Gebläsekonvektor-Modulen dienen. Es sind dabei aus einem Wärmetauscher und einem Lüfter bestehende Gebläsekonvektor-Module vorgesehen, die flüssigkeitsseitig jeweils einen Anschluss für den Ein- und Ausgang des Vorlaufs sowie des Rücklaufs des Temperiermediums und elektroseitig Anschlüsse für die Lüfter aufweisen. Im System ist jeweils ein elektronischer Raumtemperaturregler integriert, der einer an die Raumtemperatur angepassten Steuerung der Lüfter dient.

Aus der WO 2009/116387 A1 ist ferner ein Heißwasser zirkulierender Radiator bekannt, der Heißwasser-Strahlungspaneele aus Rohren aufweist, die vollständig aus einem Kunststoffharz gefertigt sind. Dabei verfügen die Heißwasser-Strahlungspaneele jeweils über eine Gruppe aus einer Mehrzahl von vertikal verlaufenden Kunststoffrohren, die in ihrem Durchmesser und in ihrer Länge einander gleich sind und parallel zueinander angeordnet sind. Die jeweiligen oberen Enden sowie die jeweiligen unteren Enden der vertikalen Kunststoffrohre kommunizieren jeweils über ein horizontales Kunststoffrohr, wobei das horizontale Kunststoffrohr an den unteren Enden der vertikalen Kunststoffrohre mit einem Heißwasser-Zufuhreinlass und einem Heißwasser-Abfuhreinlass versehen ist.

Des Weiteren offenbart die WO 98/09127 A1 einen Heizkörper mit einer Zuführung für ein Heizmedium, einer Abführung für ein Heizmedium, einer Leitung zwischen der Zu- und der Abführung sowie einer Fläche zur Abstrahlung der Wärme des Heizmediums. Dabei weist die Wärmeabstrahlungsfläche eine Profilierung auf, die die Leitung im Querschnitt wenigstens bereichsweise umgibt und wobei die Leitung in ihren querschnittlichen Abmessungen zu der Profilierung derart dimensioniert ist, dass ein Spalt von weniger als 0,1 mm zwischen der Wärmeübertragungsfläche und der Leitung im montierten Zustand verbleibt.

Es besteht insgesamt das Bedürfnis, Heizkörper in ihrer Ausgestaltung zu vereinfachen, um so insbesondere den Fertigungsaufwand sowie den Montageaufwand am Einbauort zu minimieren. Es ist deshalb die **Aufgabe** der Erfindung, einen gegenüber dem Stand der Technik neuartigen Heizkörper vorzuschlagen, der insbesondere einen verringerten Fertigungsaufwand sowie einen verringerten Montageaufwand am Einbauort ermöglicht.

Zur **Lösung** dieser Aufgabe wird mit der Erfindung ein Heizkörper der vorbeschriebenen Art vorgeschlagen, der sich dadurch auszeichnet, dass die Anschlusseinheit flexible Anschlussleitungen und Anschlüsse zum Anschluss an eine Vorlaufleitung und an eine Rücklaufleitung aufweist, wobei die Anschlüsse positionsverschieblich von der Rahmenkonstruktion gehalten sind.

Der Heizkörper nach der Erfindung zeichnet sich durch seinen modularen Aufbau aus. Als Modulkomponenten sind ein flächenhaft ausgebildetes Heizelement, eine frontseitig am Heizelement angeordnete Abdeckung sowie eine Rahmenkonstruktion vorgesehen, welche Rahmenkonstruktion das Heizelement, die Abdeckung und die Anschlusseinheit im endmontierten Zustand aufnimmt.

Die Modulkomponenten des erfindungsgemäßen Heizkörpers können nach dem Baukastenprinzip miteinander kombiniert werden, was es gestattet, eine individuelle Auslegung des Heizkörpers in Abhängigkeit der räumlichen Gegebenheiten vor Ort sowie in Abhängigkeit der im Betriebsfall geforderten Heizleistung vornehmen zu können. Diese flexible Kombinationsmöglichkeit gestattet es, den Fertigungsaufwand sowie den Montageaufwand vor Ort auf ein Minimum zu reduzieren, ebenso wie die Bestellabwicklung zu vereinfachen. Es werden nicht eine Vielzahl von Komplettheizkörper hergestellt, bevorratet und montiert, die sich hinsichtlich ihrer geometrischen Abmessungen und/oder ihrer Heizleistung voneinander unterscheiden. Es sind vielmehr Modulkomponenten vorgesehen, die wahlweise in Abhängigkeit der zu erfüllenden Anforderungen miteinander kombiniert werden können. Dies senkt den Herstell- und Fertigungsaufwand und damit auch die Kosten ebenso wie den Montageaufwand und die damit einhergehenden Kosten. Darüber hinaus wird ein größeres Maß an Flexibilität erreicht, was es in einem im Unterschied zum Stand der Technik in einem gesteigerten Maß gestattet, auf individuelle Gegebenheiten eingehen zu können.

Als eine Modulkomponente verfügt der erfindungsgemäße Heizkörper über eine Anschlusseinheit. Diese Anschlusseinheit dient der Versorgung des Heizelements mit Heizmedium, wobei über die Anschlusseinheit einerseits Heizmedium zugeführt und andererseits Heizmedium abgeführt wird.

Die Anschlusseinheit nach der Erfindung verfügt über einen mit einer Thermostateinrichtung und einem Bedienknauf ausgerüsteten Anschluss. Über den Bedienknauf ist verwenderseitig eine Temperaturregulierung möglich. Zum Zwecke der strömungstechnischen Verbindung des Anschlusses mit dem Heizelement kommen vorzugsweise flexible Anschlussleitungen, vorzugsweise in der Ausgestaltung als Kunststoffschläuche zum Einsatz. Diese Ausgestaltung hat den Vorteil, dass standardisierte Anschlussleitungslängen eingesetzt werden können, gleichzeitig aber individuelle Anschluss- und Einbausituationen vor Ort Berücksichtigung finden können.

Die Anschlusseinheit umfasst desweiteren einen Vorlaufanschluss sowie einen Rücklaufanschluss. Diese Anschlüsse sind vor Ort an die dort verfügbaren Anschlussleitungen für Heizmediumvorlauf und Heizmediumrücklauf anzuschließen. Eine strömungstechnische Verbindung sowohl des Vorlaufanschlusses als auch des Rücklaufanschlusses an den Anschluss des Heizkörpers findet ebenfalls über vorzugsweise flexible Anschlussleitungen, beispielsweise Schläuche statt. Dabei ist eine positionsverschiebliche Ausrichtung sowohl des Vorlaufanschlusses als auch des Rücklaufanschlusses möglich, was es gestattet, eine flexible und individuellen Einbauwünschen gerecht werdende Montage vor Ort vornehmen zu können.

Der Heizkörper nach der Erfindung verfügt als eine weitere Modulkomponente über ein Heizelement. Dieses ist flächenhaft ausgebildet, worunter im Sinne der Erfindung zu verstehen ist, dass es in seinen geometrischen Abmessungen derart ausgelegt ist, dass es zwei Wirkgroßflächen bereitstellt.

Das Heizelement kann in unterschiedlichen Ausgestaltungsformen vorliegen, die auch wahlweise miteinander kombiniert werden können.

Im einfachsten Fall ist das Heizelement ein Rohrregister. Im bestimmungsgemäßen Verwendungsfall wird das Rohrregister in an sich bekannter Weise von einem Heizmedium durchströmt. Dabei verfügt das Rohrregister über ein Sammelrohr für den Heizmediumvorlauf, über ein Sammelrohr für den Heizmediumrücklauf sowie über Heizrohre, die die beiden Sammelrohre strömungstechnisch miteinander verbinden.

In einer alternativen Ausgestaltung der Erfindung kann ein Heizelement über eine Mehrzahl von Rohrregistern verfügen, die vorzugsweise in Reihe hintereinander angeordnet sind. Diese sind strömungstechnisch miteinander zu einer Registereinrichtung miteinander verbunden. Zum Zwecke der strömungstechnischen Verbindung zweier Rohrregister kommen Verbindungsstücke zum Einsatz. Dabei können sowohl die Sammelrohre, die Heizrohre und/oder die Verbindungsstücke zumindest teilweise aus Kunststoff gebildet sein. Vorzugsweise handelt es sich bei den Sammelrohren, den Heizrohren und/oder den Verbindungsstücken um Kunststoffrohre.

Die Kunststoffausgestaltung erweist sich als insbesondere kostengünstig in der Herstellung. Darüber hinaus können kostengünstig standardisierte Modulkomponenten vorgefertigt und eingesetzt werden. So ist es insbesondere möglich, Standardkomponenten zu definieren und vorzufertigen, die miteinander zu Modulbaukomponenten weiterverarbeitet werden können.

Aus Kunststoff gebildete Sammelrohre können auch mit Heizrohren aus Metall kombiniert werden und umgekehrt. Es ist aber auch eine vollständige Ausgestaltung aus Kunststoff denkbar, was es gestattet, ein aus Sammelrohren und Heizrohren gebildetes Rohrregister einstückig auszubilden. Dies kann beispielsweise mittels eines Kunststoffspritzverfahrens durch Aufblasen erfolgen. Mehrere entsprechend ausgebildete Rohrregister können dann zu einer Registereinrichtung kombiniert werden, wobei eine Kaskadierung und/oder Parallelschaltung der einzelnen Rohrregister möglich ist.

Auch die die einzelnen Rohrregister strömungstechnisch miteinander verbindenden Verbindungsstücke können aus Kunststoff gebildet sein. In diesem Zusammenhang wird vorgeschlagen, dass ein Verbindungsstück zwei Verbindungsfortsätze aufweist, wobei der eine der beiden Verbindungsfortsätze an einem ersten Rohrregister und der andere der beiden Verbindungsfortsätze an einem zweiten Rohrregister vorzugsweise einstückig ausgebildet ist. Nach einem strömungstechnischen Verbinden der beiden Rohrregister bilden die von den Rohrregistern jeweils zur Verfügung gestellten Verbindungsfortsätze das Verbindungsstück aus. Eine solche Verbindung kann beispielsweise durch Schweißen, insbesondere Infrarotschweißen ausgebildet werden.

Gemäß einer weiteren alternativen Ausgestaltung kann vorgesehen sein, dass das Heizelement ein Flächenelement aufweist, das aus einem wärmeleitenden Material gebildet ist und in welches das Rohrregister beziehungsweise die Registereinrichtung des Heizelements eingebettet ist. Bei einem solchen wärmeleitfähigen Material kann es sich beispielsweise um ein Schaummaterial, insbesondere Grafitschaum handeln, mit welchem das Rohrregister beziehungsweise die Registereinrichtung umschäumt ist oder in welches das Rohrregister beziehungsweise die Registereinrichtung eingepresst ist.

Im Bedarfsfall können mehrere Heizelemente der vorbeschriebenen Art miteinander kombiniert zum Einsatz kommen, so dass auch insoweit eine Anpassung an individuelle Vorgaben in einfacher Weise möglich ist. Insbesondere lässt sich die Heizleistung in Abhängigkeit der Anzahl der eingesetzten Heizelemente vorgeben, wobei auch Heizelemente unterschiedlicher Bauart nach dem Baukastenprinzip miteinander kombiniert werden können. In der einfachsten Ausgestaltung verfügt ein Heizelement über ein Rohrregister. In einer weiterentwickelten Ausgestaltung verfügt ein Heizelement über eine aus mehreren Rohrregistern zusammengesetzte Registereinrichtung, die in ein wärmeleitfähiges Material eines Flächenelements eingebettet ist. Bevorzugt ist indes eine Ausgestaltung, wonach frontseitig ein Flächenelement, d. h. ein in ein wärmeleitfähiges Material eingebettetes Rohrregister, gefolgt von weiteren in Reihe hintereinander angeordneten Rohrregistern vorgesehen sind. Das frontseitig ausgebildete Flächenelement trägt dabei eine frontseitige Abdeckung.

Als weitere Modulkomponente verfügt der erfindungsgemäße Heizkörper über eine Abdeckung. Diese Abdeckung ist frontseitig am frontseitigen Heizelement angeordnet. Sie bildet den frontseitigen Abschluss des Heizkörpers aus. Dabei ist es bevorzugt, zum Zwecke des verbesserten Wärmeübertrags durch Strahlung eine energieschlüssige, das heißt eine möglichst wenig Verlustenergie ausmachende Verbindung zwischen dem frontseitigen Heizelement und der Abdeckung auszubilden. Als Material für die Abdeckung kommt bevorzugterweise Metall in Betracht, insbesondere in der Ausgestaltung als Blech.

Als weitere Modulkomponente des erfindungsgemäßen Heizkörpers ist eine Rahmenkonstruktion vorgesehen. Diese Rahmenkonstruktion trägt im endmontierten Zustand des Heizkörpers das Heizelement, die Abdeckung sowie die Anschlusseinheit. Grundsätzlich ist es möglich, eine Werkvormontage des Heizkörpers vornehmen zu können, was bevorzugt ist. Am Einbauort ist dann nur noch eine individuelle Einstellung, das heißt Positionierung des Vorlaufanschlusses und des Rücklaufanschlusses vorzunehmen. Alsdann kann eine endfertige Montage vorgenommen werden. Alternativ zu dieser herstellerseitigen Vormontage kann auch ein Zusammenbau aller Modulkomponenten vor Ort erfolgen. In diesem Fall ist in einem ersten Schritt die Rahmenkonstruktion zu montieren. Alsdann können in weiteren Montageschritten das Heizelement, die Abdeckung und die Anschlusseinheit eingesetzt und eine strömungstechnische Verbindung der entsprechenden Komponenten vorgenommen werden.

Um insgesamt eine Montagevereinfachung zu ermöglichen, wird mit der Erfindung vorgeschlagen, die das Heizelement frontseitig abdeckende Abdeckung verschwenkbar an der Rahmenkonstruktion anzuordnen. Im Montage- beziehungsweise Demontagefall kann so durch einfaches Verschwenken der Abdeckung relativ gegenüber der Rahmenkonstruktion ein Zugriff auf die einzelnen Modulkomponenten des Heizkörpers ermöglicht werden. Insbesondere ist bei verschwenkter Abdeckung ein ungehinderter Zugriff auf die Anschlusseinheit und die davon bereitgestellten Anschlussleitungen möglich. Alternativ kann auch vorgesehen sein, das Heizelement zusammen mit der daran angeordneten Abdeckung verschwenkbar an der Rahmenkonstruktion anzuordnen.

Zur Erzielung eines gesteigerten Wärmeaustausches, das heißt zur Erhöhung der konvektiven Wärmeleistung des Heizkörpers kann gemäß einer optionalen Ausgestaltung der Erfindung eine mechanische Luftförderung mittels eines Ventilators vorgesehen sein. Je nach Ausgestaltung des Heizkörpers können auch mehrere solcher Ventilatoren vorgesehen sein. Dabei ist eine Anordnung der Ventilatoren in Höhenrichtung unterhalb des oder der Heizelemente bevorzugt, so dass eine zielgerichtete Luftdurchströmung stattfinden kann.

Der Heizkörper nach der Erfindung dient im bestimmungsgemäßen Verwendungsfall der Heizung eines Raums oder Teilen hiervon. Eine Verwendung des Heizkörpers in thermodynamischer Umkehr, das heißt als Kühleinrichtung, ist selbstredend auch möglich. Der konstruktive Aufbau ist dadurch nicht beeinflusst. In diesem Fall kommt anstelle eines Heizmediums ein Kühlmedium zum Einsatz, das das vorstehend beschriebene Rohrregister beziehungsweise die Registereinrichtung durchströmt.

Weitere Merkmale und Vorteile der Erfindung ergeben sich aus der nachfolgenden Beschreibung anhand der Figuren. Dabei zeigen
- Fig. 1: in schematisch perspektivischer Darstellung ein Heizkörper nach der Erfindung;
- Fig. 2: in schematisch perspektivischer Darstellung den Heizkörper nach Fig. 1 mit verschwenkter Abdeckung;
- Fig. 3: in schematisch perspektivischer Darstellung die Rahmenkonstruktion des Heizkörpers nach Fig. 1;
- Fig. 4: in einer schematischen Frontansicht die Rahmenkonstruktion nach Fig. 3;
- Fig. 5: in einer schematischen Seitenansicht die Rahmenkonstruktion nach Fig. 4;
- Fig. 6: in einer schematischen Draufsicht von oben die Rahmenkonstruktion nach Fig. 4;
- Fig. 7: in einer schematischen Frontansicht den Heizkörper nach der Erfindung mit verschwenkter Abdeckung gemäß Fig. 2. ;
- Fig. 8: in einer schematischen Seitenansicht den Heizkörper nach Fig. 7;
- Fig. 9: in einer schematischen Draufsicht von oben den Heizkörper nach Fig. 7;
- Fig. 10: in einer schematischen Frontansicht den Heizkörper nach Fig. 1;
- Fig. 11: in einer schematischen Seitenansicht den Heizkörper nach Fig. 10 und
- Fig. 12: in einer schematischen Draufsicht von oben den Heizkörper nach Fig. 10.

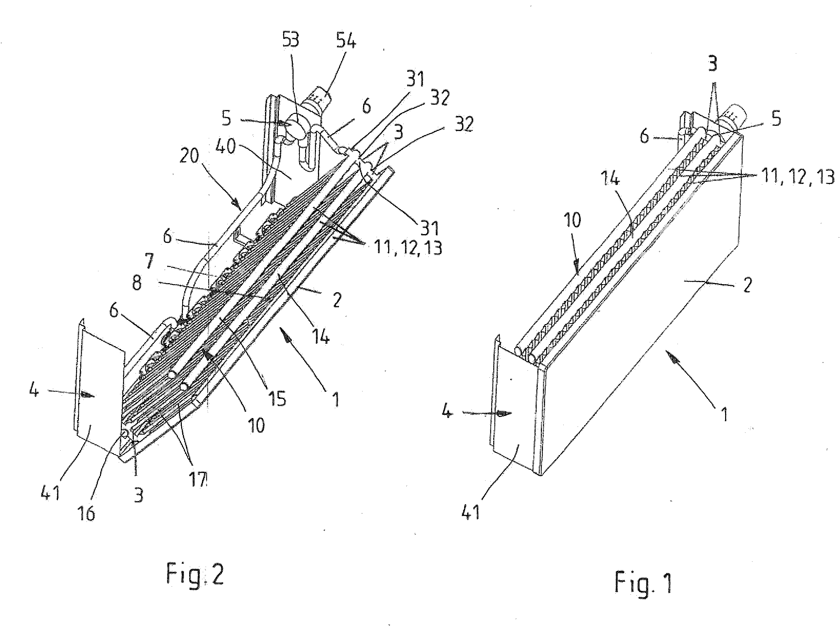

Der erfindungsgemäße Heizkörper 1 ist in den Fign. 1 und 2 jeweils in schematisch perspektivischer Ansicht gezeigt, wobei Fig. 1 einen endfertig montierten Heizkörper 1 zeigt. Fig. 2 lässt den Heizkörper 1 indes mit verschwenkter Abdeckung 2 erkennen.

Der Heizkörper 1 nach der Erfindung ist modular aufgebaut. Er verfügt über mehrere Modulkomponenten, die miteinander kombiniert sind. Je nach Anwendungsfall, das heißt insbesondere gewünschte Heizleistung und/oder Einbausituation vor Ort können unterschiedlich ausgebildete Modulkomponenten wahlweise miteinander nach dem Baukastenprinzip miteinander kombiniert werden.

Der Heizkörper 1 nach der Erfindung verfügt als eine Modulkomponente über ein flächenhaft ausgebildetes Heizelement 10. Dieses Heizelement 10 weist ein Rohrregister 11 auf, das aus einem Sammelrohr 15 für den Heizmediumvorlauf, ein Sammelrohr 16 für den Heizmediumrücklauf und mehreren die Sammelrohre 15 und 16 strömungstechnisch miteinander verbindende Heizrohre 17 gebildet ist. Das Ausführungsbeispiel nach den Figuren zeigt ein Heizelement 10, das über insgesamt drei Rohrregister 11, 12 und 13 gebildet ist, die jeweils gleich ausgebildet und strömungstechnisch zu einer Registereinrichtung 14 miteinander verbunden sind. Zum Zwecke der strömungstechnischen Verbindung der einzelnen Rohrregister 11, 12 und 13 sind Verbindungsstücke 3 vorgesehen, mittels denen benachbarte Rohrregister strömungstechnisch miteinander gekoppelt sind.

Gemäß dem in den Figuren gezeigten Ausführungsbeispiel ist ein Verbindungsstück 3 aus zwei Verbindungsfortsätzen 31 und 32 gebildet. Dabei stellt ein Rohrregister 11, 12, 13 auf seiner ersten großen Wirkseite einen ersten Verbindungsfortsatz 31 und auf seiner zweiten großen Wirkseite einen zweiten Verbindungsfortsatz 32 zur Verfügung. Im endmontierten Zustand sind dann der Verbindungsfortsatz 31 eines ersten Rohrregisters und der Verbindungsfortsatz 32 eines zweiten Rohrregisters miteinander zu einem Verbindungsstück 3 verbunden, wie sich insbesondere aus der Darstellung nach Fig. 2 ergibt. Die Verbindung der beiden ein Verbindungsstück 3 ausmachenden Verbindungsfortsätze 31 und 32 kann beispielsweise durch Schweißen erfolgen. Denkbar ist aber auch eine einstückige Ausgestaltung der gesamten Registereinrichtung 14.

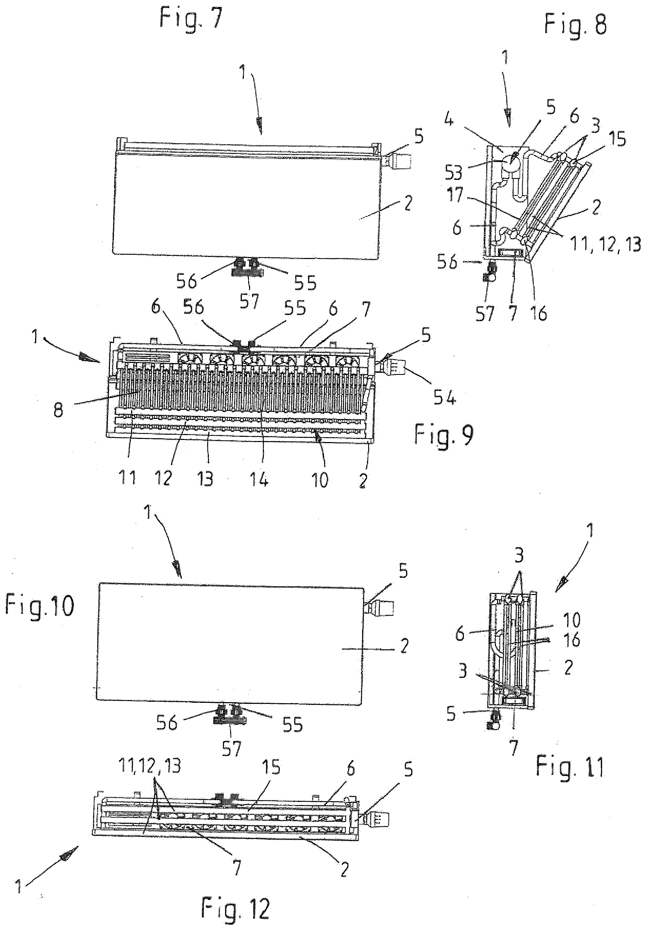

Der Heizkörper 1 verfügt als weitere Modulkomponente über eine Abdeckung 2. Diese ist frontseitig des Heizelements 10 ausgebildet. Im gezeigten Ausführungsbeispiel trägt das frontseitig zuerst angeordnete Rohrregister 13 die Abdeckung 2, wie sich insbesondere aus einer Zusammenschau der Figuren 8 und 9 ergibt.

Als weitere Modulkomponente ist eine Anschlusseinheit 20 vorgesehen. Diese dient der Versorgung des Heizelements 10 mit einem Heizmedium.

Die Anschlusseinheit 20 verfügt heizkörperseitig über einen eine Thermostateinrichtung 53 aufweisenden Anschluss 5. Die Thermostateinrichtung 53 ist über einen Bedienknauf 54 verwenderseitig bedienbar. Der Anschluss 5 stellt ferner zwei Anschlussstutzen 51 und 52 bereit.

Zur Anschlusseinheit 20 gehören desweiteren ein Vorlaufanschluss 55 sowie ein Rücklaufanschluss 56, die am Einbauort an eine Anschlussleitung 57 anzuschließen sind. Dieser Sachzusammenhang ergibt sich insbesondere aus der Darstellung nach den Figuren 7 und 8.

Der Vorlaufanschluss 55 und der Rücklaufanschluss 56 sind vorzugsweise positionsverschieblich in Relation zum Heizelement 10 ausgebildet und an der Rahmenkonstruktion 4 angeordnet, was eine individuelle Anschlusskonfiguration am Einbauort gestattet.

Zur strömungstechnischen Verbindung des Vorlaufanschlusses 55 und des Rücklaufanschlusses 56 mit dem Heizelement 10 beziehungsweise den Anschlussstutzen 51 und 52 des Anschlusses 5 kommen flexible Leitungen 6 in Form von vorzugsweise Kunststoffschläuchen zum Einsatz. Eine beispielhafte Leitungsinstallation ist insbesondere den Figuren 2 und 8 zu entnehmen.

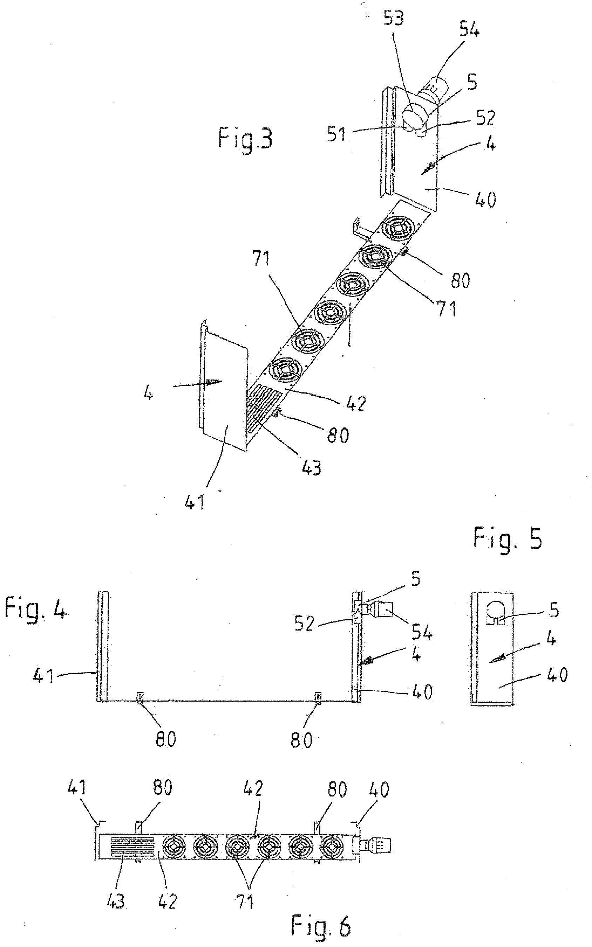

Der erfindungsgemäße Heizkörper 1 verfügt als weitere Modulkomponente über eine Rahmenkonstruktion 4. Diese ergibt sich insbesondere aus der Darstellung nach den Figuren 3 und 4 bis 6.

Die Rahmenkonstruktion 4 nimmt im endmontierten Zustand das Heizelement 10, die Abdeckung 2 und die Anschlusseinheit 20 auf, wobei die Abdeckung 2 bevorzugterweise verschwenkbar an der Rahmenkonstruktion 4 angeordnet ist. Zum Zwecke der Wandmontage sind Wandhalter 80 vorgesehen, auf denen die Rahmenkonstruktion 4 im endmontierten Zustand ruht.

Die Rahmenkonstruktion 4 besteht, wie insbesondere die Darstellung nach den Figuren 3 und 4 erkennen lässt, aus zwei Seitenteilen 40 und 41 und einem Bodenteil 42. Bei diesen Teilen kann es sich um miteinander verschraubte oder sonstwie miteinander verbundene Blechteile handeln. Das Bodenteil 42 ist zum Zwecke einer erhöhten konvektiven Leistung des Heizkörpers 1 mit Luftschlitzen 43 ausgerüstet. Für eine Anordnung des Heizkörpers 1 an einer Gebäudewand sind Befestigungseinrichtungen 8 vorgesehen, die rückseitig des Heizkörpers 1 ausgebildet sind.

Zur weiteren Erhöhung der konvektiven Leistung des Heizkörpers 1 können ferner Ventilatoren 7 vorgesehen sein, die sich heizkörperinnenseitig auf dem Bodenteil 42 abstützen, wie sich insbesondere aus der Darstellung nach den Figuren 8 und 11 ergibt. Dabei ist einem jeden Ventilator 7 eine Ventilatoröffnung 71 im Bodenteil 42 zugeordnet. Es sind nach dem gezeigten Ausführungsbeispiel insgesamt sechs Ventilatoren 7 vorgesehen, die in Reihe geschaltet sind.

### Bezugszeichenliste

- 1.: Heizkörper
- 2: Abdeckung
- 3: Verbindungsstück
- 4: Rahmenkonstruktion
- 5: Anschluss
- 6: Leitung
- 7: Ventilator 3
- 8: Befestigungseinrichtung
- 10: Heizelement
- 11: Rohrregister
- 12: Rohrregister
- 13: Rohrregister
- 14: Registereinrichtung
- 15: Sammelrohr
- 16: Sammelrohr
- 17: Heizrohr
- 20: Anschlusseinheit
- 31: Verbindungsfortsatz
- 32: Verbindungsfortsatz
- 40: Seitenteil
- 41: Seitenteil
- 42: Bodenteil
- 43: Lüftungsschlitze
- 51: Anschlussstutzen
- 52: Anschlussstutzen
- 53: Thermostateinrichtung
- 54: Bedienknauf
- 55: Vorlaufanschluss
- 56: Rücklaufanschluss
- 57: Anschlussleitung
- 71: Ventilatoröffnung
- 80: Wandhalter

## Patentansprüche

1. Heizkörper zur Heizung eines Raumes oder Teilen hiervon, mit einem modularen Aufbau, wobei als Modulkomponenten ein flächenhaft ausgebildetes Heizelement (10), eine frontseitig am Heizelement (10) angeordnete Abdeckung (2), eine Anschlusseinheit (20) zur Versorgung des Heizelements (10) mit einem Heizmedium sowie eine das Heizelement (10), die Abdeckung (2) und die Anschlusseinheit (20) aufnehmende Rahmenkonstruktion (4) vorgesehen sind, wobei die Anschlusseinheit (20) Anschlussleitungen (6) und Anschlüsse (55, 56) zum Anschluss an eine Vorlaufleitung und an eine Rücklaufleitung aufweist, wobei die Anschlüsse (55, 56) an der Rahmenkonstruktion (4) angeordnet und von der Rahmenkonstruktion gehalten sind, **dadurch gekennzeichnet, dass**
die Anschlussleitungen (6) flexibel sind, und dass die Anschlüsse (55, 56) jeweils positionsverschieblich in Relation zum Heizelement (10) ausgebildet sind.

2. Heizkörper nach Anspruch 1, **dadurch gekennzeichnet, dass** das Heizelement (10) ein Rohrregister (11, 12, 13) aufweist, das über ein Sammelrohr (15) für den Heizmediumvorlauf, ein Sammelrohr für den Heizmediumrücklauf sowie über die Sammelrohre (15, 16) strömungstechnisch miteinander verbindende Heizrohre (17) verfügt.

3. Heizkörper nach Anspruch 2, **dadurch gekennzeichnet, dass** das Heizelement (10) eine Mehrzahl von in Lagen angeordnete und strömungstechnisch miteinander zu einer Registereinrichtung (14) verbundene Rohrregister (11, 12, 13) aufweist.

4. Heizkörper nach Anspruch 3, **dadurch gekennzeichnet, dass** zur Verbindung mehrerer Rohrregister (11, 12, 13) zu der Registereinrichtung (14) Verbindungsstücke (3) vorgesehen sind.

5. Heizkörper nach Anspruch 4, **dadurch gekennzeichnet, dass** die Verbindungsstücke (3) mit den Rohrregistern (11, 12, 13) einstückig ausgebildete Verbindungsfortsätze (31, 32) aufweisen.

6. Heizkörper nach einem der vorhergehenden Ansprüche 2 bis 5, **dadurch gekennzeichnet, dass** die Sammelrohre (15, 16) und/oder die Heizrohre (17) und/oder die Verbindungsstücke (3) zumindest teilweise aus Kunststoff gebildet sind.

7. Heizkörper nach einem der vorhergehenden Ansprüche, **dadurch gekennzeichnet, dass** die Abdeckung (2) energieschlüssig mit dem Rohrregister (11, 12, 13) verbunden ist.

8. Heizkörper nach einem der vorhergehenden Ansprüche 2 bis 7, **dadurch gekennzeichnet, dass** das Rohrregister (11, 12, 13) außenseitig mit lamellenartig ausgebildeten Konvektionsflächen ausgestattet ist.

9. Heizkörper nach Anspruch 8, **dadurch gekennzeichnet, dass** die Konvektionsflächen zumindest teilweise aus Kunststoff bestehen und vorzugsweise einstückig mit dem Rohrregister (11, 12, 13) ausgebildet sind.

10. Heizkörper nach einem der vorhergehenden Ansprüche, **dadurch gekennzeichnet, dass** die Rahmenkonstruktion (4) zwei Seitenteile (40, 41) und ein Bodenteil (42) aufweist.

11. Heizkörper nach einem der vorhergehenden Ansprüche, **gekennzeichnet durch** einen Ventilator (7), der vorzugsweise innenseitig der Rahmenkonstruktion (4) am Bodenteil (42) derselben angeordnet ist.

12. Heizkörper nach einem der vorhergehenden Ansprüche, **gekennzeichnet durch** einen Wandhalter (80), der der wandseitigen Abstützung der Rahmenkonstruktion (4) dient.

## Claims

1. A radiator for heating a room or parts thereof, comprising a modular structure, wherein a planar heating element (10), a cover (2) arranged on the front side of the heating element (10), a connecting unit (20) for supplying the heating element (10) with a heating medium as well as a frame construction (4) receiving the heating element (10), the cover (2) and the connecting unit (20) are provided as modular components, wherein the connecting unit (20) comprises connection pipes (6) and connections (55, 56) for the connection with a flow line and a return flow, wherein the connections (55, 56) are arranged on the frame construction (4) and held by the frame construction, **characterized in that** the connection pipes (6) are flexible and that the connections (55, 56) are respectively designed such that their position can be displaced with respect to the heating element (10).

2. A radiator according to claim 1, **characterized in that** the heating element (10) comprises a pipe register (11, 12, 13) which comprises a collector pipe (15) for the heating medium flow line, a collector pipe for the heating medium return flow as well as heating pipes (17) which fluidically connect the collector pipes (15, 16).to each other.

3. A radiator according to claim 2, **characterized in that** the heating element (10) comprises a plurality of pipe registers /11, 12, 13) which are arranged in layers and connected to each other to form a register unit (14).

4. A radiator according to claim 3, **characterized in that** connecting pieces (3) are provided for connecting several pipe registers (11, 12, 13) in order to form the register unit (14).

5. A radiator according to claim 4, **characterized in that** the connecting pieces (3) comprise connecting extensions (31, 32) which are integrally formed with the pipe registers (11, 12, 13).

6. A radiator according to one of the preceding claims 2 through 5, **characterized in that** the collector pipes (15, 16) and/or the heating pipes (17) and/or the connecting pieces (3) are at least partially made of plastic.

7. A radiator according to one of the preceding claims, **characterized in that** the cover (2) is connected in an energy-consistent manner to the pipe register (11, 12, 13).

8. A radiator according to one of the preceding claims 2 through 7, **characterized in that** the pipe register (11, 12, 13) is provided, on the outside thereof, with convection areas that are formed like lamellas.

9. A radiator according to claim 8, **characterized in that** the convection areas are at least partially made of plastic and are preferably integrally formed with the pipe register (11, 12, 13).

10. A radiator according to one of the preceding claims, **characterized in that** the frame construction (4) comprises two side parts (40, 41) and a bottom part (42).

11. A radiator according to one of the preceding claims, **characterized by** a ventilator (7) which is preferably arranged on the inner side of the frame construction (4) on the bottom part (42) of the same one.

12. A radiator according to one of the preceding claims, **characterized by** a wall bracket (80) which serves to support the frame construction (4) on the wall.

## Revendications

1. Radiateur destiné à chauffer un espace ou des parties de celui-ci, comprenant une structure modulaire, un élément de chauffage (10) réalisé en forme de surface, un recouvrement (2) disposé sur le front de l'élément de chauffage (10), une unité de raccordement (20) pour alimenter l'élément de chauffage (10) en un moyen de chauffage ainsi qu'une construction de cadre (4) recevant l'élément de chauffage (10), le recouvrement (2) et l'unité de raccordement (20) étant prévus comme des composants du module, l'unité de raccordement (20) comprenant des tuyaux de raccordement (6) et des raccords (55, 56) pour le raccordement à une conduite d'arrivée et à une conduite de retour, les raccords (55, 56) étant disposés sur la construction de cadre (4) et étant retenus par la construction de cadre, **caractérisé en ce que** les tuyaux de raccordement (6) sont flexibles et que les raccords (55, 56) sont chacun configurés de sorte que leur position peut être déplacée par rapport à l'élément de chauffage (10).

2. Radiateur selon la revendication 1, **caractérisé en ce que** l'élément de chauffage (10) comprend un registre tubulaire (11, 12, 13), qui comprend un tuyau collecteur (15) pour la conduite d'arrivée du moyen de chauffage, un tuyau collecteur pour la conduite de retour du moyen de chauffage ainsi que des tuyaux de chauffage (17), qui relient les tuyaux collecteurs (15, 16) l'un à l'autre de manière fluidique.

3. Radiateur selon la revendication 2, **caractérisé en ce que** l'élément de chauffage (10) comprend une pluralité de registres tubulaires (11, 12, 13), qui sont disposés en couches et qui sont reliés l'un à l'autre de manière fluidique pour former un ensemble de registres (14).

4. Radiateur selon la revendication 3, **caractérisé en ce que** des pièces de connexion (3) sont prévues pour relier plusieurs registres tubulaires (11, 12, 13) pour former l'ensemble de registres (14).

5. Radiateur selon la revendication 4, **caractérisé en ce que** les pièces de connexion (3) comprennent des prolongements de connexion (31, 32), qui sont d'un seul tenant avec les registres tubulaires (11, 12, 13).

6. Radiateur selon l'une des revendications précédentes 2 à 5, **caractérisé en ce que** les tuyaux collecteurs (15, 16) et/ou les tuyaux de chauffage (17) et/ou les pièces de connexion (3) sont au moins partiellement fabriqués en plastique.

7. Radiateur selon l'une des revendications précédentes, **caractérisé en ce que** le recouvrement (2) est relié de manière cohérente en énergie au registre tubulaire (11, 12, 13).

8. Radiateur selon l'une des revendications précédentes 2 à 7, **caractérisé en ce que** le registre tubulaire (11, 12, 13) est équipé sur le côté extérieur des surfaces de convection en forme de lamelles.

9. Radiateur selon la revendication 8, **caractérisé en ce que** les surfaces de convection sont au moins partiellement fabriquées en plastique et sont de préférence solidaires du registre tubulaire (11, 12, 13).

10. Radiateur selon l'une des revendications précédentes, **caractérisé en ce que** la construction de cadre (4) comprend deux pièces latérales (40, 41) et une partie de fond (42).

11. Radiateur selon l'une des revendications précédentes, **caractérisé par** un ventilateur (7), qui est de préférence disposé sur le côté intérieur de la construction de cadre (4) sur la partie de fond (32) de celle-ci.

12. Radiateur selon l'une des revendications précédentes, **caractérisé par** un support mural (80), qui sert à supporter la construction de cadre (4) au mur.
